# EUROPEAN PATENT APPLICATION

(11) **EP 4 283 694 A1**
(43) Date of publication of application: **29.11.2023**
(21) Application number: 22175183.7
(22) Date of filing: 24.05.2022
(51) Int. Cl.: H01M 4/04, H01M 4/137, H01M 4/1399, H01M 4/60, H01M 10/0525

(54) **CATHODE MATERIALS FOR LITHIUM-SULFUR BATTERIES**

(71) Applicant: Universität Stuttgart, 70174 Stuttgart (DE)
(72) Inventor: Buchmeiser, Michael, 73630 Remshalden (DE); Du, Qian, 430200 Jianxia, Wuhan (CN)
(74) Representative: Meissner Bolte Partnerschaft mbB

(57) **Abstract**

The present invention is concerned with sulfurized cathode materials for lithium-sulfur (Li-S) batteries on the basis of sulfurized poly(propylene) (S/PP-500), sulfurized poly(norbornadiene) (S/pNBD-400) and sulfurized poly(dicyclopentadiene) (S/pDCPD-400), cathodes, which are prepared with such cathode materials and electrochemical cells, which contain such cathodes, lithium metal as anode, a separator and an electrolyte. These electrochemical cells show high capacity, good rate capability as well as the long cycle life. In addition, the present invention is concerned with then use of respective electrochemical cells for energy storage.

## Description

The present invention is concerned with sulfurized cathode materials for lithium-sulfur (Li-S) batteries on the basis of sulfurized poly(propylene) (S/PP-500), sulfurized poly(norbornadiene) (S/pNBD-400) and sulfurized poly(dicyclopentadiene) (S/pDCPD-400) cathodes, which are prepared with such cathode materials, and electrochemical cells, which contain such cathodes, lithium metal as anode, a separator and an electrolyte. These electrochemical cells show high capacity, good rate capability as well as long cycle life. In addition, the present invention is concerned with then use of respective electrochemical cells as batteries or battery packs in portable equipment, electrical vehicles and stationary energy storage for energy storage.

### State of Art

Currently, batteries, especially lithium-ion batteries, play an important role in our modern society. They are widely employed in portable equipment, electrical vehicles and local stationary energy storage devices. Currently, increasing attention is devoted to high energy density batteries.

Lithium-ion batteries based on cathode materials in layer, spinel- or olivine structure materials such as LiCoO₂ or mixed metal LiNi₍₁₋ₓ₎CoₓO₂ are still state of art. Nevertheless, the further improvement of cathode materials in terms of discharge capacity is limited by their theoretical capacity. Also, some raw materials such as nickel and cobalt are not environmentally friendly and suffer from unstable supply and availability.

Lithium-sulfur (Li-S) batteries hold great promise for next-generation high energy density electrochemical storage devices. The theoretical energy density of a Li-S battery is about 2500 Wh/kg, which is much higher compared to the state of art lithium-ion batteries. In addition, sulfur is not only economical, non-toxic and abundant on earth, but also has a high theoretical capacity of up to 1672 mAh/g_{sulfur}.

Despite the high theoretical capacity density, the practically reachable capacity density of Li-S batteries today is still only moderate, which is due to the following factors: (1) poor electronic conductivity of sulfur; (2) the polysulfide shuttle; (3) large volume changes during discharge/charge.

Intense research has been devoted to solving these challenges. S. Zhang, Electrochim. Acta 2012, 70, 344 applied LiNO₃ as an additive to building a passivation film, which effectively suppresses the dissolution of polysulfides on the lithium anode surface. However, the voltage window of Li-S batteries with LiNO₃ as the additive is limited to 1.6 - 3 V to avoid irreversible reduction of LiNO₃ on the cathode.

Other studies focus on the development of cathode materials to tackle these challenges. One category of cathode materials comprises porous conductive carbons, which can buffer the volume changes and increase the electronic conductivity of the cathode. Also, depending on the pore size or functional groups present in the material, the polysulfide shuttle can be suppressed to a certain extent. Within this context, highly ordered interwoven composites (X. Ji et al., Nat. Mater. 2009, 8, 500), sulfur encapsulated into microporous carbon spheres (B. Zhang et al., Energy Environ. Sci. 2010, 3, 1531), sulfur confined in microporous carbons (Z. Li et al., Adv. Energy Mater. 2014, 4, 1301473), or in carbon nanotubes (J. Guo et al., Nano Lett. 2011, 11, 4288.) and in reduced graphene oxide (C. Wang et al., Nano Lett. 2015, 15, 1796) can be mentioned.

However, cathode materials based on porous carbons generally require rather complex synthetic procedures. Also, the sulfur loading is limited to 50 wt.-%, which prevents high energy densities of the final batteries. Alternatively, sulfurized polymers with sulfur covalently bound to the polymeric matrix are used as cathode materials. These comprise, e.g. sulfurized polyacrylonitrile (SPAN) (L. Wang et al. Electrochim. Acta 2012, 72, 114; J. Fanous et al. J. Electrochem. Soc. 2013, 160, A1169, S. Warneke et al., J. Electrochem. Soc. 2018, 165, A2093; P. Wang et al., Electrochim. Acta 2020, 361, 137024; S. Murugan et al. Batteries&Supercaps 2021, 4, 1636.). Unfortunately, the sulfur loading of SPAN is limited to ≤45 %, which is insufficient to meet the mark for practical electrochemical performance. Also, sulfurized PS-DVB materials have to be mentioned here, too (Mutlu, H.; Ceper, E. B.; Li, X.; Yang, J.; Dong, W.; Ozmen, M. M.; Theato, P., Macromol. Rapid Commun. 2018, 1800650; Chung, W. J.; Griebel, J. J.; Kim, E. T.; Yoon, H.; Simmonds, A. G.; Ji, H. J.; Dirlam, P. T.; Glass, R. S.; Wie, J. J.; Nguyen, N. A.; W:, G. B.; Park, J.; Somogyi, A.; Theato, P.; Mackay, M. E.; Sung, Y.-E.; Char, K.; Pyun, J., Nature Chem. 2013, 5, 518; Simmonds, A. G.; Griebel, J. J.; Park, J.; Kim, K. R.; Chung, W. J.; Oleshko, V. P.; Kim, J.; Kim, E. T.; Glass, R. S.; Soles, C. L.; Sung, Y.-E.; Char, K.; Pyun, J., ACS Macro Lett. 2014, 3, 229; Griebel, J. J.; Li, G.; Glass, R. S.; Char, K.; Pyun, J., J. Polym. Sci. A: Polym. Chem. 2015, 53, 173).

In order to respond to these challenges that so far still hamper the practical application of Li-S batteries, a cathode material design that combines the use of chemically bound sulfur, high sulfur loading, and simple synthesis is needed.

### Description of the Invention

In this invention, a simple method for the synthesis of sulfurized polymers is described, which can advantageously be used in the preparation of cathodes for Li-S batteries. The resulting batteries, which are based on these sulfurized polymer cathodes feature a virtually polysulfide-shuttle-free behavior. Particularly suitable sulfurized polymers for use as cathode materials together with a lithium metal anode are sulfurized polypropylene (S/PP-500), sulfurized poly(norbornadiene)(S/pNBD-400) and sulfurized poly(dicyclopentadiene) (S/pDCPD-400).

Accordingly, in a first aspect, the present invention concerns a cathode material for lithium-sulfur batteries, which comprises a sulfurated poly(propylene), a sulfurated poly(dicyclopentadiene) or a sulfurated poly(norbornadiene), wherein the respective sulfurated polymers are prepared by an insertion polymerization method. This method preferably involves thermally reacting the precursor polymer (i.e. non-sulfurated poly(propylene), poly(dicyclopentadiene) or poly(norbornadiene)) with an excess of sulfur at elevanted temperature, such that the precursor polymer is sulfurated.

In addition to the surfurated polymer, the cathode material preferably comprises one or more binders and one or more conductive materials. Suitable binders for use in the cathode material include in particular poly(vinylidene fluoride) (PVDF), poly(acrylic acid) (PAA) and carboxymethyl cellulose (CMC), where poly(vinylidene fluoride) is most preferred as binder. Suitable conductive materials include especially cabon based materials such as carbon black, carbon fibers, carbon powder, graphite or coated graphite, where carbon black is most preferred as conductive material in terms of costs and performance.

The sulfurated polymer is included into the cathode material in suitable amounts, where it is preferred from the aspect of energy density and weight of the cathode material, that the sulfurated polymer accounts for the major weight portion of the cathode material. Preferably, the sulfurated polymer makes 45 to 90% of the total weight of the cathode material, more preferably the sulfurated polymer accounts for equal to or higher than 50 wt.-% or even equal to or higher than 60 wt.-% such as from 60 to 80 wt.-%, and most preferably from 65 to 75 wt.-%.

If the cathode material comprises a conductive additive, the content thereof in the cathode material is preferably from 5 to 25 wt.-%, more preferably from 5 to 20 wt.-%, and even more preferably from 5 to 15 wt.-%.

If the cathode material comprises a binder, similarly, the content thereof in the cathode material is preferably from 5 to 25 wt.-%, more preferably from 5 to 20 wt.-%, and even more preferably from 5 to 15 wt.-%.

With regard to the form or morphology, the precursor polymer in the cathode material is not subject to any relevant restrictions, and any form, which can be processed with sulfur at elevated temperature can be used. Possible forms include e.g. fibrous, monolithic or pellicular forms, but also a sheet, film, honeycomb, rod or mesh-form is possible. The particle size of the precursor is preferably smaller than 500 µm, while the lower limit of the powder size is less important. In case the sulfurated polymer is sulfurized poly(norbornadiene) or sulfurized poly(dicyclopentadiene), the morphology of the precursor polymer is preferably monolithic or pellicular.

The final sulfur content in the sulfurated polymer is suitably in the range from 30 to 75 wt.-% and preferably in the range from 30 to 67 wt.-%. If the sulfurated polymer is sulfurated poly(propylene), the sulfur content is more preferably 45 to 75 wt.-%. If the sulfurated polymer is sulfurated poly(cyclopentadiene) or poly(norbornadiene), the sulfur content is more preferably 45 to 67 wt.-%, even more preferably 40 to 55 wt.-%.

In a further aspect, the present application pertains to a method for the preparation of a cathode material as described above, wherein a mixture of a poly(propylene), poly(dicyclopentadiene), or poly(norbornadiene) precursor polymer is heated with sulfur under a flow of inert gas to a temperature suitable to react the polymer precursor with the sulfur. A suitable temperature range for such reaction is 400 to 600°C. If the precursor polymer is poly(propylene), the precursor polymer is prefably reacted at a temperature from 500 to 550°C, and more preferably at about 500 °C. If the precursor polymer is poly(norbornadiene) or poly(dicyclopentadiene), the precursor polymer is prefably reacted at a temperature of about 400 °C.

The wording "about" in relation to the temperatures given above is intended to denote variations by ± 15°C, preferably ± 10°C. The wording "about" in the following is intended to denote variations of the indicated value in the range of rounding (i.e. if a value of "about 1" is given, this denotes the range of 0.5 to 1.49).

The precursor polymer can be any poly(propylene), poly(dicyclopentadiene), or poly(norbornadiene), which is available to the skilled practitioner. Preferred polymer percursors are prepared by Ziegler-Natta polymerization or ring-opening metathesis polymerization (ROMP). Accordinly, the inventive process preferably involves a step of preparing the precursor polymer by Ziegler-Natta polymerization prior heating with sulfur, if the precursor polymer is polypropylene, or in the case of poly(norbonadiene) or poly(dicyclopentadiene), preparing the precursor polymer by ring-opening metathesis polymerization.

In a particularly preferred embodiment, the inventive cathode material is prepared via a method, which has the following steps:
Step 1: Dependig on the precursor polymer to be used, synthesizing the precursor polymers pNBD and pDCPD by ring-opening metathesis polymerization (ROMP).
Step 2: Grinding the precursor polymer (pNBD, pDCPD or PP) e.g. to a particle size of about 50 - 400 µm.
Step 3: Mixing the precursor polymer with excess sulfur and then preheating the mixture to 150 °C under a flow of inert gas for several hours.
Step 4: Increasing the heating temperature to 400 or 500 °C by applying a heating rate of 1 K/min and holding this temperature under a flow of inert gas for 5 hours. Subsequently, cooling the mixture to room temperature within 12 h.
Step 5: Removing excess sulfur that did not react with the polymer precursor by Soxhlet extraction using refluxing toluene for 3 days. Subsequently, drying the obtained sulfurized polymer under vacuum (less than 15 mbar) for at least 12 h.
Step 6: Grinding the material, e.g. in a Swing mill for 10 minutes (30 Hz), and sieving, e.g. through a 63 µm mesh sieve, to obtain a homogenous particle size distribution and a small particle size.

In step 2, the precursor polymer after grinding is less than ca. 0.5 ^{∗}0.5 ^{∗}0.5 cm in dimension, preferably smaller than 200 µm in diameter.

In step 3 the mass ratio between sulfur and the precursor can be controlled e.g. in a range of 3 : 1 to 30 : 1, preferably the ratio between 10 : 1 to 20 : 1. Moreover, in step 3 the holding time of preheating process is 3 to 96 hours, and preferably more than 30 hours.

In step 4, the highest heating temperature can be set to 350-550 °C, and preferably is from 400 to 500 °C.

In step 4, the holding time of the heating process is 3 to 8 hours, and preferably about 5 hours.

In steps 3 and 4, the precursor is submerged under liquified sulfur. In steps 3 and 4 above, the inert gas is usually N₂, but can any other inert gas, such as Ar.

In step 6, the time for the swing mill can be in a range of 5 to 60 minutes, and preferably is about 10 minutes.

In a yet further aspect, the present application is concerned with a cathode for a lithium ion battery, which comprises a dispersion of a cathode material as described above or a cathode material, which is prepared according to the method as described, which is coated on a conductive foil with a suitable wet thickness. Preferably, the wet thickness of the coating is from 100 to 800 mm, more preferably from 200 to 600 mm, and even more preferably about 300 µm. The "wet thickness" here designates the thickness of the dispersion with a solvent, which suitably is used in the form of *N*-methyl-2-pyrrolidone (NMP). The conductive foil is preferably seleceted from a carbon-coated copper foil, a graphite foil, an aluminum foil, a stainless steel foil, a carbon-coated aluminum foil, a gold foil or a platinum foil. Such cathode is preferably used in a lithium-sulfur battery.

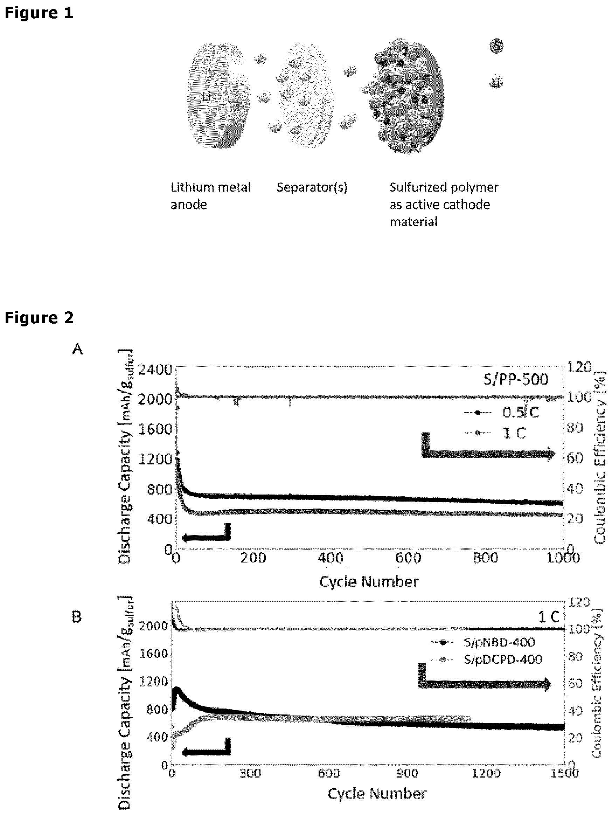

In a yet further aspect, the present application pertains to an electrochemical cell, which comprises a cathode formed with cathode material as described above or a cathode material, which is prepared according to the method as described above, wherein the electrochemical cell further comprises lithium metal as an anode, one or more separators located between the cathode and anode and an electrolyte. A basic design of such electrochemical cell with two separators is shown in Figure 1.

The separator must be chemically inert to the anode, cathode and electrolyte at the same time. Suitable separators with such properties include a glass fiber separator or a polyolefin-based separator, wherein the polyolefin in the polyolefin-based separator is preferably polypropylene (PP).

In the electrochemical cell, lithium metal, preferably in form of a lithium foil, is used as anode.

The electrolyte in the electrochemical cell is preferably a solution of lithium hexafluorophosphate (LiPF₆) in carbonates. On the other hand, there are no particular restrictions for the electrolyte and the lithium salt for the electrolyte can also comprise lithium tetrafluoroborate, lithium bis(oxalato)borate, lithium difluoro(oxalato)borate, lithium bis(trifluoromethanesulfonyl)imide, lithium triflate, or lithium perchlorate. The solvents for the electrolyte can be selected from, but are not limited to, ethylene carbonate (EC), diethyl carbonate (DEC), dimethyl carbonate (DMC), 1,3-dioxolane (DIOX), tetraethylene glycol dimethyl ether (TEGDME), 1,2-dimethoxyethane (DME), or mixtures of more than one of these solvents mentioned. The prefered solvent is a 50:50 mixture (by volume) of EC and DEC. The concentration of the lithium salt in the electrolyte can be form 0.1 to 5 mol/L, and preferably is about 1 mol/L.

In a particularly preferred embodiment, the inventive electrochemical cell comprises two glass fiber separators and a carbonate-based electrolyte.

In one preferred embodiment, the inventive electrochemical cell has a cutoff voltage in a range of 0.1-0.8 V, in particular a lower cutoff voltage of 0.45 V, where the cathode is based on sulfurized polypropylene. In another preferred embodiment, the inventive electrochemical cell has a cutoff voltage in a range of 0.01-0.2 V, in particular a lower cutoff voltage of 0.1 V, where the cathode is based on sulfurized poly(norbornadiene) or sulfurized poly(dicyclopentadiene).

In a yet further aspect, the present invention pertains to a battery or battery pack, which comprises at least one of the cathode materials as described above or a cathode material, which is prepared according to the method as described above or an electrochemical cell as described above. Preferably, the battery comprises more than one of the electrochemical cells as described above.

In a yet further aspect, the present invention pertains to a use of the batteries or battery packs as in the aforementioned aspect for the storage of electrical energy. Such use regularly includes a charging process of the battery or battery pack via an electrical current, and a discharging process of the battery or battery pack. In this aspect, the battery or battery pack can be provided in a vehicle and especially an electric vehicle or hybrid car. Alternatively, the battery or battery pack can be used to store and provide electrical energy for portable or handheld electronic devices such as cell phones or laptops, or for local (stationary) energy storage, in remote relay stations, ships, or aeroplanes.

### Brief description of the drawings:

Figure 1 shows a basic design of an electrochemical cell according to the invention, which has a lithium metal anode (left side), two separators (middle) and a sulfurized polymer as active cathode material as a cathode (right side).
Figure 2 shows cycle test results of electrochemical cells comprising S/PP-550, S/pNBD-400 and S/pDCPD-400 as cathode materials. (A) shows the cycle test of S/PP-500 (S/PP-500: carbon black: PVDF = 70:15:15, all wt.) at 0.5 and 1 C using a cutoff voltage of 0.45 V, and (B) shows the cycle test of S/pNBD-400 and S/pDCPD-400 (active material: carbon black: PVDF = 70:15:15 all wt.) at 1 C using a cutoff voltage of 0.01 V.
Figure 3 shows the discharge profiles of (A) S/PP-500, (B) S/pNBD-400 and (C) S/pDCPD 400.
Figure 4 shows SEM images of (A) S/PP-500, (B) S/pNBD-400 and (C) S/pDCPD 400.
Figure 5 shows rate capability tests of (A) S/PP-500, and (B) S/pNBD 400 and S/pDCPD r400, respectively.

In the following, the present invention will further be described by means of illustrative examples, which should however not be construed as limiting to the scope of the invention by any means.

### Examples

### Example 1: Preparation of sulfurized poly(propylene) (S/PP-500)

S/PP-500 was prepared in a one-step reaction. First, isotactic polypropylene (it-PP, ca. 1.0 g, average Mₙ 5000 g/mol, *Ð* = 2.4) was placed inside a high-temperature resistant quartz glass tube with excess sulfur (ca. 15 g). The glass tube was placed inside a furnace apparatus (Nabertherm, Germany) and was heated to 150°C under a flow of N₂ for 8 hours to fully melt the sulfur. Then the temperature was gradually increased to 500 °C by applying a heating rate of 1 K/min; then this temperature was held for another 5 hours. Afterward, the glass tube was cooled to room temperature overnight.

The excess amount of sulfur that was not reacted with PP was removed via Soxhlet extraction using refluxing toluene for 3 days. The obtained S/PP-500 was dried under vacuum overnight. The sulfur content in this S/PP-500 was 68 wt.-%. In order to obtain a homogenous particle size distribution and a small particle size, the material was ground via a Swing mill for 10 minutes (30 Hz) and sieved through a 63 µm mesh sieve.

### Example 2: Preparation of poly(norbornadiene) and poly(dicyclopentadiene)

For the synthesis of poly(norbornadiene) (pNBD) or poly(dicyclopentadiene) (pDCPD), 7.5 g of norbornadiene (81 mmol) or 7.5 g of dicyclopentadiene (81 mmol) were mixed with the surfactant Span 80 (0.525 g, 1.2 mmol) inside a 250 mL round-bottomed flask. 30 mL distilled water was added dropwise over the course of 1 hour, while the mixture was stirred with a mechanical stirrer at 400 rpm. Then, the initiator (dichloro[1,3-bis(2,4,6-trimethylphenyl)-2-imidazolidinylidene](3-phenyl-1*H*-inden-1-ylidene)(tricyclohexylphosphine)ruthenium(II), 1.93 mg, 0.02 mmol), dissolved in 200 µL of toluene, was quickly added to the mixture under vigorous stirring. Subsequently, the pinky mixture was poured into a 5x5x5 cm silicon mold. pNBD was prepared at 40°C in a water bath within 2 hours while pDCPD was prepared at 80°C within 3 hours. After curing, the resulting foam was submerged under acetone and sonicated for 90 minutes. The foam was dried under vacuum overnight at room temperate and stored in an Ar-filled glovebox.

### Example 3: Preparation of sulfurized poly(norbornadiene) S/pNBD-400 and sulfurized poly(dicyclopentadiene) S/pDCPD-400

In an Ar-filled glovebox pNBD or pDCPD was cut into small pieces (ca. 0.5×0.5×0.5 cm) to increase the surface area. Ca. 1 g of pNBD or pDCPD were placed inside a high-temperature resistant quartz tube and mixed with excess sulfur (ca. 20 g). Then, the glass tube was transferred into an oven, preheated to 150°C for 32 hours under a flow of N₂ to melt the sulfur. Next, the mixture was allowed to cool to room temperature and the black/dark brown chunks were ground by hand. This powder (ca. 2 g) was loaded into a high-temperature resistant glass quartz tube, mixed with sulfur (10 g) and the tube was placed into a furnace apparatus (Nabertherm, Germany) and heated to 400°C applying a heating rate of 1 K/min. After the temperature of the furnace reached 400°C, this temperature was held for another 5 hours. Finally, the glass tube was cooled to room temperature overnight. An excess amount of sulfur was removed via Soxhlet extraction using hot toluene at 150°C for 3 days. The obtained S/pNBD-400 or S/pDCPD-400 was dried under vacuum overnight. The sulfur content of he thus obtained S/pNBD-400 and S/p-DCPD-400 was 50 wt.-% and 48 wt.-%, respectively. In order to obtain a homogenous particle size distribution and a small particle size, the material was ground in a Swing mill for 10 minutes (30 Hz) and sieved through a 63 µm mesh sieve.

### Example 4: Preparation of the cathode materials

The sulfurated polymer was mixed with carbon black and PVDF in a ratio of 70:15:15 (wt.-%) in *N*-methyl-2-pyrrolidone (NMP). The ratio between active material and NMP was 1:10 wt/wt. The components were mixed using a mixer (Thinky Are-250) for 6 min. Next, the dispersion was coated on a carbon-coated copper foil with a wet thickness of 300 µm and dried at 40°C under vacuum for several hours before being transferred into a 60°C oven to dry overnight. Cathodes 12 mm in diameter were punched out with the aid of a cathode puncher. The average sulfur loading was ca. 0.88 mg/cm², which corresponds to 1.5 mAh/cm².

### Example 5: Preparation of a three-electrode test cell

Three-electrode Swagelok-type cells were applied for cell fabrication. Batteries were assembled in an Ar-filled glovebox. Lithium metal, punched out by a hollow punch 12 mm in diameter, was employed as anode. A 1 M LiPF₆ solution in a mixture of EC and DEC (50:50, wt.-%) was used as electrolyte. Two glass fiber separators 12.5 mm in diameter were placed between anode and cathode to avoid any contact. 100 µL of electrolyte consisting of 1 M LiPF₆ solution in a mixture of EC and DEC (50:50, wt.-%) was added onto each glass fiber separator. For the reference electrode, the reference stamp was filled with lithium metal with a smooth surface, while two separators 10 mm in diameter were placed between the reference electrode and the rest the battery, i.e the cathode, the separators and the anode. 50 µL electrolyte was added onto each separator.

### Example 6: Cycle stability of S/PP-500 as cathode in a Li-S half cell

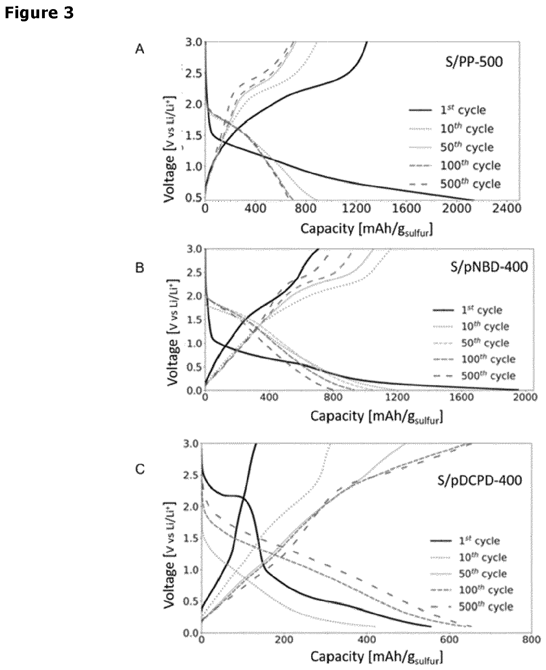

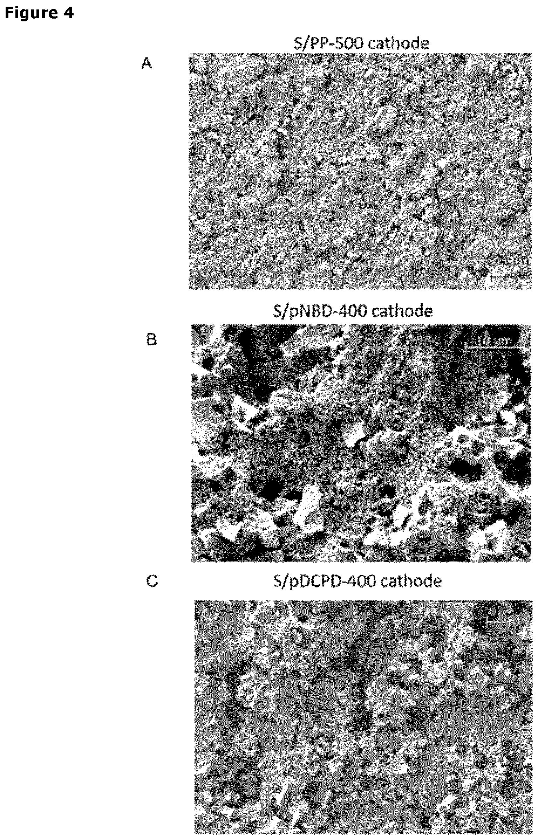

The sulfur content of the cathode consisting of 70% active material, 15 % PVDF and 15% carbon black was 0.88 mg/cm². The cell was cycled at 0.45 to 3 V at 0.5 C and 1C, respectively (1 C = 1672 mA/g = 1 mA cm²). The results of the cycle stability test are shown in Figure 2A. The coulombic efficiency of the cell was stable around 100% for more than 1000 cycles. The discharge capacity of the cell was up to 1000 mAh/g_{sulfur}. The discharge capacity quickly decreased in the first few cycles, which may be related to solid electrolyte interface (SEI) formation. Then the discharge capacity stayed above 520 mAh/g_{sulfur} at 1 C and above 450 mAh/g_{sulfur} at 0.5 C up to 1000 cycles. Figure 3A depicts the voltage profile of the cell at the 1^{st}, 10^{th}, 50^{th}, 100^{th} and 500^{th} cycle, respectively. The SEM picture of an S/PP-500 based cathode in Figure 4A shows a homogenous distribution of both the active material and the carbon black.

### Example 7: Cycle stability of an S/PP-500-based cathode at various charge/discharge rates

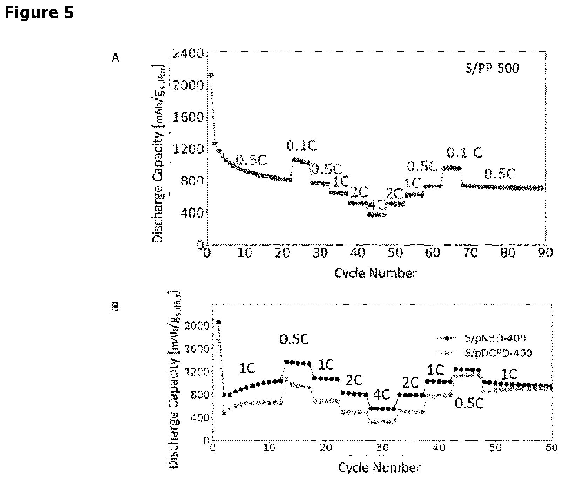

The sulfur content of a cathode consisting of 70% of active material, 15 % PVDF as binder and 15% carbon black was 0.88 mg/cm². The cutoff voltages were set to 0.45 V and 3 V, respectively. The cell was cycled between 0.1 to 4 C. Results are shown in Figure 5A. The cell delivered around 1000, 800, 600, 500 and 400 mAh/g_{sulfur} at 0.1 C, 0.5 C, 1 C, 2 C and 4 C, respectively. With a decrease of the current rate from 4 C to 0.5 C, the capacity recovered to the previous level.

### Example 8: Cycle stability of S/pNBD-400 and S/pDCPD-400 based cathodes in Li-S half cells

The sulfur content of a cathode consisting of 70% active material, 15 % PVDF and 15% carbon black was ca. 0.7 mg/cm². Cells were cycled at 0.1 to 3 V at 1 C. The results are shown in Figure 2B. Both the S/pNBD-400 and S/pDCPD-400 based cells showed a high coulombic efficiency of ca. 100% for more than 1000 cycles. During the first 100 cycles, the discharge capacity was not stable, however, reached a stable stage with high coulombic efficiency after the 100^{th} cycle, attributable to the SEI layer formation. S/pNBD-400 based cells delivered a high discharge capacity up to 1050 mAh/g_{sulfur} at 1 C with a capacity retention of 62% after 1500 cycles. S/pDCPD-400 based cells also delivered a stable capacity up to 680 mAh/g_{sulfur} at 1C for more than 1000 cycles.

### Example 9: Rate capability of S/pNBD-400 and S/pDCPD-400 based cathodes in Li-S half cells

The sulfur content of a cathode consisting of 70% of active material, 15 % PVDF and 15% carbon black was ca. 0.72 mg/cm². The cutoff voltage was set to 0.1 V and 3 V, respectively. Cells were cycled between 0.5 C and 4 C. Results are shown in Figure 5B. S/pNBD-400 based cells delivered around 1200, 1000, 800 and 600 mAh/g_{sulfur} at 0.5 C, 1 C, 2 C and 4 C, respectively. With the decrease of the current rate from 4 C to 0.5 C, the capacity recovered back to the previous level. S/pDCPD-400 based cells delivered around 1080, 900, 450 and 350 mAh/g_{sulfur} at 0.5 C, 1 C, 2 C and 4 C, respectively. With the decrease of the current rate, the capacity at least reversed back to the previous level.

## Claims

1. Cathode material for lithium-sulfur batteries, **characterized in that** it comprises a sulfurated poly(propylene), a sulfurated poly(dicyclopentadiene) and/or a sulfurated poly(norbornadiene), wherein the respective sulfurated polymers are prepared by an insertion polymerization method.

2. Cathode material according to claim 1, **characterized in that** the sulfurated polymers are prepared via thermal reaction of the precursor polymer (poly(propylene), poly(dicyclopentadiene), poly(norbornadiene)) with an excess of sulfur at elevated temperature.

3. Cathode material according to claim 1 or 2, **characterized in that** the cathode material further comprises conductive additive and a binder, wherein the conductive additive is preferably selected from carbon black, carbon fibers, carbon powder, graphite or coated graphite and wherein the binder is preferably selected from poly(vinylidene fluoride), poly(acrylic acid) or carboxymethyl cellulose.

4. Cathode material according to any one of claims 1-3, **characterized in that** it comprises the sulfurated polymer in a weight ratio of from 45 to 90 wt.-%, preferably from 60 to 80 wt.-%, most preferably from 65 to 75 wt.-%.

5. Cathode material according to claim 3 or 4, **characterized in that** it comprises the conductive additive in a weight ratio of from 5 to 25 wt.-%, preferably from 5 to 20 wt.-%, most preferably from 5 to 15 wt.-%.

6. Cathode material according to any one of claims 3 to 5, **characterized in that** it comprises the binder in a weight ratio of from 5 to 25 wt.-%, preferably from 5 to 20 wt.-%, most preferably from 5 to 15 wt.-%.

7. Cathode material according to any one of claims 2 to 6, **characterized in that** the precursor polymer is fibrous, monolithic, pellicular, or in the form of a sheet, film, honeycomb, rod or mesh.

8. Cathode materials according to any one of claims 1 to 7, **characterized in that** the sulfurated polymers have a sulfur content of 30 to 75 wt.-%, preferably 40 to 55 wt.-%, when the sulfurated polymer is sulfurated poly(dicyclopentadiene) or poly(norbornadiene), and 45 to 75 wt.-%, when the sulfurated polymer is sulfurated polypropylene.

9. Method for the preparation of a cathode material according to any one of claims 1 to 8, **characterized in that** a mixture of a poly(propylene), poly(dicyclopentadiene), or poly(norbornadiene) precursor polymer is heated with sulfur under a flow of inert gas to a temperature of from 400 to 600 °C, preferably of from 500 to 550°C, and more preferably to about 500 °C if the precursor polymer is poly(propylene) and to about 400 °C if the precursor polymer is poly(norbonadiene) or poly(dicyclopentadiene).

10. Method according to claim 9, wherein the polypropylene is prepared by Ziegler-Natta polymerization prior being heated with sulfur, or wherein the poly(dicyclopentadiene) and poly(norbornadiene) are prepared by ring-opening metathesis polymerization (ROMP).

11. Cathode for a lithium ion battery, **characterized in that** it comprises a dispersion of a cathode material according to any one of claims 1 to 8 or a cathode material prepared according to the method in claim 9 or 10, which is coated on a conductive foil with a wet thickness between 100 and 800 mm, preferably 200 to 600 mm, most preferably about 300 µm, wherein the conductive foil is preferably a carbon-coated copper foil, graphite foil, aluminum foil, stain steel foil, carbon-coated aluminum foil, gold foil or platinum foil.

12. Electrochemical cell comprising a cathode formed with cathode material according to any one of claims 1 to 8 or a cathode material prepared according to the method in claim 9 or 10, wherein the electrochemical cell further comprises lithium metal as an anode, one or more separators located between the cathode and anode and an electrolyte, wherein the separator is preferably a glass fiber separator or a polyolefin-based separator, in particular where the polyolefin is polypropylene.

13. Electrochemical cell according to claim 12, **characterized in that** the electrolyte is based on a solution of a lithium salt in a solvent, wherein the lithium salt is preferably selected from lithium hexafluorophosphate, lithium tetrafluoroborate, lithium bis(oxalato)borate, lithium difluoro(oxalato)borate, lithium bis(trifluoromethanesulfonyl)imide, lithium triflate, or lithium perchlorate, and wherein the solvent is preferably selected from one or more of the following: ethylene carbonate, diethyl carbonate, dimethyl carbonate, 1,3-dioxolane, tetraethylene glycol dimethyl ether, 1,2-dimethoxyethane.

14. Electrochemical cell according to claim 12 or 13, wherein the cell has a cutoff voltage in a range of 0.1-0.8 V, preferably 0.45 V as lower cutoff voltage, if the cathode is based on sulfurized polypropylene and wherein the cell has a cutoff voltage in a range of 0.01-0.2 V, preferably 0.1 V as lower cutoff voltage, if the cathode is based on sulfurized poly(norbornadiene) or sulfurized poly(dicyclopentadiene).

15. A battery or battery pack comprising at least one of the cathode materials according to claims 1 to 8 or a cathode material prepared according to the method of claim 9 or 10 or an electrochemical cell according to any one of claims 12 to 14.

16. Use of the battery or battery pack according to claim 15 for energy storage purposes, preferably in a car, an electrical vehicle, a hybrid car, a portable equipment, or for local (stationary) energy storage, in remote relay stations, ships, an aeroplane.
